(19) Europäisches Patentamt

European Patent Office

Office européen des brevets

(11) Publication number: **0 406 860 B1**

(12) **EUROPEAN PATENT SPECIFICATION**

(45) Date of publication of patent specification: **05.10.94**  Int. Cl.⁵: $C03C\ 25/02$, $C03B\ 37/027$, $G01B\ 7/12$, $G01B\ 7/10$

(21) Application number: **90112856.1**

(22) Date of filing: **05.07.90**

(54) **Method and device for producing conductive thin film-coated optical fiber.**

(30) Priority: **06.07.89 JP 174978/89**
**09.04.90 JP 93429/90**

(43) Date of publication of application:
**09.01.91 Bulletin 91/02**

(45) Publication of the grant of the patent:
**05.10.94 Bulletin 94/40**

(84) Designated Contracting States:
**DE FR GB IT**

(56) References cited:
**EP-A- 0 174 017**
**CH-A- 564 182**
**CH-A- 574 879**
**US-A- 4 735 856**

(73) Proprietor: **SUMITOMO ELECTRIC INDUS-TRIES, LTD.**
**5-33, Kitahama 4-chome,**
**Chuo-ku**
**Osaka-shi, Osaka 541 (JP)**

(72) Inventor: **Yoshimura, Ichiro, c/o Yokohama Works of**
**Sumitomo Elecctric Industries, Ltd.,**
**1, Taya-cho**
**Sakae-ku, Yokohama-shi, Kanagawa (JP)**
Inventor: **Nagayama, Katsuya, c/o Yokohama Works of**
**Sumitomo Elecctric Industries, Ltd.,**
**1, Taya-cho**
**Sakae-ku, Yokohama-shi, Kanagawa (JP)**

(74) Representative: **Lehn, Werner, Dipl.-Ing. et al**
**Hoffmann, Eitle & Partner,**
**Patentanwälte,**
**Postfach 81 04 20**
**D-81904 München (DE)**

## Description

This invention relates to production of an optical fiber, specifically a method and a device for producing a conductive thin film-coated optical fiber.

(Related Background Art)

The optical fibers of quarz tend to absorb water and hydrogen molecules, which results in deterioration of the strength of the optical fibers and increase of the optical transmission loss. Conventionally precoats of ultraviolet-curable acrylate resins or others are applied to optical fibers immediately after they are drawn from preforms. But since such organic high molecular films alone are insufficient for air-tightness, today a precoat is divided in two or more layers, and first an inorganic thin film of aluminum or others is applied, and then a resin coating is applied thereto. Studies have been made on various ones of the inorganic thin film, and recently amorphous carbon has been noted because of its good air-tightness. The amorphous carbon is described in, e.g., C. M. G. Jochem, et al's paper presented in "Optical Fiber Communications Conference 1989".

The inorganic thin film coating of the surface of the optical fiber is applied, in many cases, by, e.g., the chemical vapor deposition (CVD) technique immediately after the optical fiber is drawn from a preform. The film formed by this technique has a thickness as small as some tens of nanometers, and this film thickness and quality vary under the influence of many factors, such as drawing speeds, treatment temperatures of the CVD, and concentrations, pressures, flow rates, etc. of reaction gases. Accordingly it is not easy to assure the thin film coating with a uniform thickness and a homogeneous quality without film breakages all over the length of a fiber as long as tens of kilometers at a high spinning speed of, e.g., 5 to 10 m/sec.

In controlling the characteristics of this inorganic thin film of an optical fiber, it is very preferable to measure film characteristics of the inorganic thin film, such as film thickness and film quality, in its producing process to control the above-described factors based on the measured results.

But conventionally, a certain length of an optical fiber which has been drawn and coated with the inorganic thin film and a resin, and taken up by a drum is cut off as a sample, and the resin coating of the sample is removed to measure the thickness, etc. of the inorganic thin film. Accordingly it is impossible to assure uniform characteristic of the inorganic thin film all over the length of the optical fiber.

A first object of this invention is to provide a method making it possible to continuously measure the characteristics of an inorganic thin film applied to an optical fiber.

A second object of this invention is to provide a device realizing application of an inorganic thin film of uniform characteristics to the entire length of an optical fiber by controlling conditions for producing the optical fiber, based on the measured results of the inorganic thin film.

This invention is based on that some inorganic thin films used as coatings of optical fibers have conductivity.

The above first object is solved by a method for producing a conductive thin film coated optical fiber, comprising:
- the first step of coating an optical fiber drawn from a preform with a conductive thin film; and
- the second step of passing the thin film coated optical fiber through a high frequency magnetic field to perform a non-contact measurement of an eddy current generated in the conductive thin film of the thin film coated optical fiber so as to measure thin film characteristics of the conductive thin film.

In a preferred embodiment the method comprises the step of applying and curing a resin after the application of the conductive thin film prior to the second step.

Furthermore, it is advantageous when coating conditions for the conductive thin film in the first step are controlled based on the film characteristic measured in the second step.

The above second object is solved by a device for producing a conductive thin film coated optical fiber, comprising
- a fiber drawing furnace for heating to melt a preform to draw an optical fiber;
- thin film coating means for applying a conductive thin film to the drawn optical fiber;
- film characteristics measuring means for measuring film characteristics of the conductive thin film comprising an air-core detection coil connected to a high frequency power source and measuring the film characteristics of the conductive thin film, based on a variation of an alternating current impedance of the detection coil generated when the optical fiber is passed through the hollow interior of the detection coil.

In a preferred embodiment, the film characteristic measuring means further comprises an air-core reference coil which has substantially the same characteristics as the detection coil and is connected to the high-frequency power source and detecting means for detecting a variation of the alternating current impedance in the detection coil by detecting a difference between an alternating current impedance of the detection coil and that of the reference coil.

In a further embodiment the thin film coating means further comprises control means for controlling coating conditions based on a measured value of the film characteristics by the film characteristics measuring means.

It is preferred, when the control means controls the coating conditions based on a difference between a measured value of the film characteristics and a preset value of the film characteristic.

It is further preferred, when the film characteristic measuring means is disposed downstream of a resin coating device for applying a resin to the conductive thin film.

From CH-A-564 182 it is known to measure the thickness of an insulating layer coating a conductive object, i.e. a wire or cable. The coated object passes the air gap of a measuring coil comprising a high-frequency core. The electromagnetic field entering the conductive core of the coated cable effects the inductivity of the measuring coil depending on the distance between the air gap and the conductive core of the cable. The outer surface of the insulating layer therefore contacts the measuring coil or is kept in a predetermined distance by means of a control device to allow determination of insulating layer thickness on the basis of a changed inductivity.

Fig. 1 is a view explaining the device for producing a conductive thin film-coated optical fiber according to the first embodiment;

FIG. 2 is an enlarged partially broken sectional view of a major part of the device of FIG. 1;

FIG. 3 is a view explaining the device for producing a conductive thin film-coated optical fiber according to the second embodiment of this invention;

FIG. 4 is a view explaining the device for producing a conductive thin film-coated optical fiber according to the third embodiment of this invention;

FIG. 5 is an enlarged partially broken sectional view of a major part of the device of FIG. 4; and

FIG. 6 is a view of the embodiment explaining the control of the film characteristics of the conductive thin film.

## DESCRIPTION OF THE PREFERRED EMBODIMENT

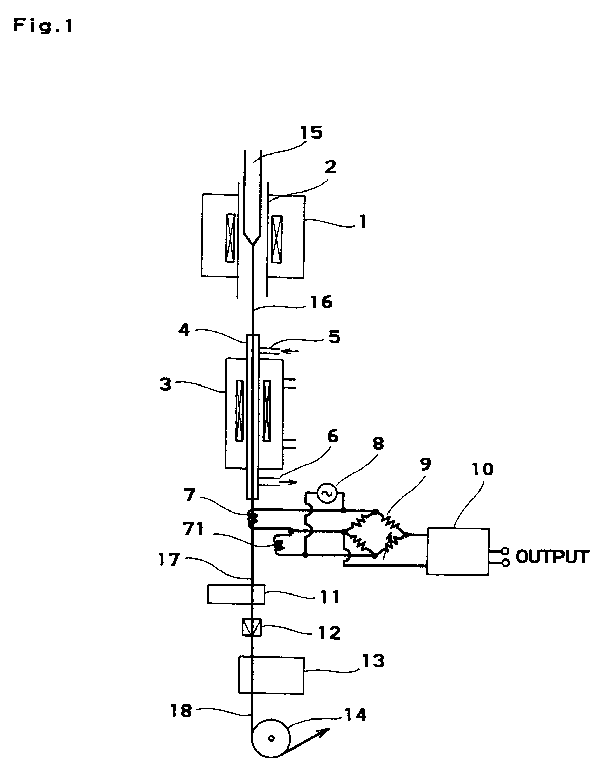

As shown in a first embodiment of FIG. 1, a preform 15 of quartz which is a main component of an optical fiber is inserted into a inner tube 2 of a fiber drawing furnace 1. The leading end of the preform 15 is drawn to form a bare fiber 16 of the optical fiber while being heated to soften by a heater in the fiber drawing furnace 1. In this embodiment, the bare fiber has an outer diameter of $125\mu$ m. Immediately the bare fiber 16 is fed into a susceptor 4 of a heat CVD (chemical vapor deposition with thermal decomposition) furnace 3 which exemplifies coating devices. A reaction gas is fed through a reaction gas inlet port 5 in the upper part of the susceptor 4 and heated by a heater in the susceptor 4 to be thermally decomposed, so that an conductive thin film is formed on the surface of the bare fiber 16. The gas after the reaction is discharged through an exhaust port 6 in the lower part of the susceptor 4.

In this embodiment, the reaction gas is methane, and the produced conductive material is carbon. But this invention does not limit them to these materials. The material of the conductive thin film may be any as long as it can provide a strong conductive air-tight layer on the surface of an optical fiber without affecting the optical fiber. The coating device can be selected in accordance with a material of the conductive thin film. For example, in the case of carbon, very conveniently the coating device of a simple structure, such as a heat CVD furnace, can easily form a strong conductive air-tight layer, using, in place of methane, a reaction gas, such as acetylene, which is easily available. The carbon here covers amorphous carbon and fine crystalline carbon.

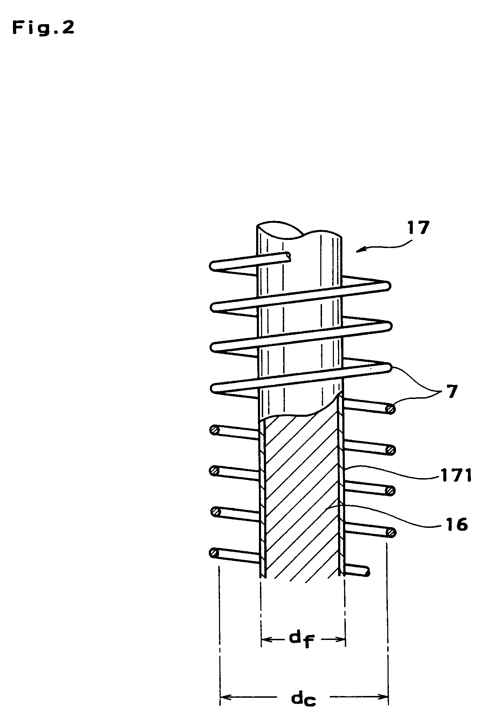

The optical fiber 17 with the conductive thin film coated on the surface is passed through a detection coil 7 after it has been passed through the heat CVD furnace 3. The detection coil 7 is an air-core coil and, in this embodiment, has an inner diameter of 500 $\mu$m. The center of the coil and that of the optical fiber are aligned with high accuracy so that the optical fiber does not contact the coil during its passage therethrough. FIG. 2 shows the dimensional relationship between the detection coil and the optical fiber. As shown in this drawing, the optical fiber 17 comprises the bare fiber 16 and the conductive thin film 171 applied thereto, and the optical fiber 17 is passed through the hollow interior of the detection coil 7. In the drawing, $d_f$ represents an outer diameter of the optical fiber 17, and $d_c$ indicates an inner diameter of the detection coil 7.

A reference coil 71 is an air-core coil having the same configuration and dimensions as those of the detection coil 7, and the two coils 7, 17 have the same characteristics at least in alternating current impedance. In this embodiment, the detection coil 7 and the reference coil 71 are supplied with a high-frequency current of 200 MHz by a high-frequency power source 8. The coils 7, 71 are connected to an a.c. bridge 9. The output of the a.c. bridge 9 is connected to a signal processing unit 10 comprising a microcomputer or the like.

The devices from the detection coil 7 to the signal processing unit 10 correspond to the film thickness measuring device exemplifying the film characteristics measuring means, which is one of the constituent members of this whole invention.

The outer diameter of the optical fiber 17 which has been passed through the detection coil 7 is gauged with a laser beam by an outer diameter gauge 11, then is coated with a resin by a die 12, and is subjected to UV radiation or heating, in a curing furnace 13 for the curing of the resin. The thus prepared thin film-coated optical fiber 18 is taken up by a drum (not shown) through a capstan 14.

The method for producing an optical fiber according to an embodiment will be explained below in connection with the operation of the device according to the first embodiment.

In FIG. 1, the bare fiber 16 for an optical fiber drawn in the fiber drawing furnace 1 is heated in the susceptor 4 of the heat CVD furnace 3 by the heater. A reaction gas contacts the surface of the bare fiber 16 and it is thermally decomposed, and a conductive material, e.g., carbon or others, is deposited on the surface of the bare fiber 16 to form a thin film thereon.

When the optical fiber 17 with the conductive thin film 171 thus applied to the surface is passed through the hollow interior of the detection coil 7, an eddy current is generated in the conductive thin film 171. This is because the conductive thin film 171, which is a conductor, on the surface of the optical fiber 171 is placed in a magnetic field generated by a high-frequency current in the detection coil 7. Simultaneously the eddy current also generates a magnetic field which acts to the detection coil 7 to vary its apparent a.c. impedance. On the other hand, the a.c. impedance of the reference coil 71 does not vary because the reference coil 71 has an air core. While a difference in the a.c. impedance between the detection and the reference coils 7, 71 is watched by the a.c. bridge 9, the a.c. bridge 9 is operated to compensate the difference, whereby a variation in the a.c. impedance generated in the detection coil 7 can be detected as a manipulated variable of the a.c. bridge 9.

The intensity of the eddy current and the variation of the a.c. impedance resulting therefrom contain information of the thickness of the conductive thin film. Then, a relationship between the variation and the film thickness is stored beforehand as measured amounts by a memory built in the signal processing unit 10. A variation of the a.c. impedance generated in the detection coil 7 as described above is actually measured, and this information is processed by the signal processing unit 10 to measure the film thickness. This film thickness measuring device compensates an external disturbance factor applied commonly to both coils 7, 71, and a result of high measuring accuracy can be obtained. The electric resistance of the conductive thin film used for the measurement of the film thickness contains information of the film quality, etc. in addition to the film thickness and thus gives an important clue to evaluation of the characteristic of the film. That is, this film thickness measuring device can present the data of the film characteristics of the conductive thin film all over the optical fiber without cutting off a part of an optical fiber as long as tens kilometers taken up by a drum.

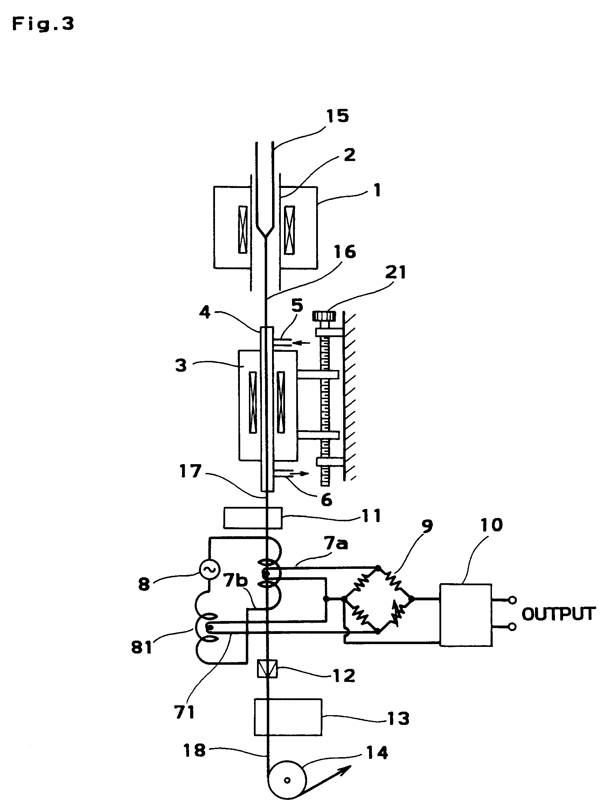

FIG. 3 is the overall block diagram of the device according to a second embodiment of this invention.

This embodiment differs from the first embodiment in that in the former an outer diameter gauge 11 and a detection coil are located vertically opposite to those in the first embodiment, and a detection coil comprises a coil 7b for generating a magnetic field around an optical fiber, and a detection coil 7a connected to an a.c. bridge 9.

It is preferable that the coil 7a, 7b is inserted in a position where the optical fiber least deflects so that the optical fiber does not contact the coil. In this sense, it is preferable to locate the coil before or behind a die 12. In view of this, in this embodiment an outer diameter gauge 11 and the coil 7a, 7b are located vertically opposite to those in the first embodiment to position the coil 7a, 7b nearer to the die 12. Further it is possible to integrate the coil 7a, 7b with the die 12. In this case the die 12 and its accessories should all be made of insulative materials, because the a.c. impedance is much affected, if a conductive material is located near the coil.

In this embodiment, the detection coil comprises the coil 7b for generating a magnetic field around the optical fiber, and the detection coil 7a connected to the a.c. bridge 9 for the purpose of assigning the role of supplying an exciting energy to the coil 7b other than the detection coil 7a whereby to decrease a current to the detection coil 7a, with a result that the temperature rise, vibrations, etc. of the detection coil 7a are easily prevented, and thus the measuring accuracy is improved. Corresponding to the separation of the detection coil in the two, the reference coil as well is separated in a coil 81 connected to the high-frequency power source 8 and a reference coil 71 connected to the a.c. bridge 9.

In measuring the film thickness in the embodiments of FIGs. 1 and 3, in order to generate an eddy current which has a sufficient intensity with a constant high-frequency current, it is necessary to make the charging ratio $\nu$ higher as much as possible (near to 1). The charging ratio $\nu$ is a ratio of a sectional area of the optical fiber to a sectional area of the hollow interior of the coil, and is defined by

$$\nu = (d_f / d_c)^2 \qquad (1)$$

where $d_f$ is an outer diameter of the optical fiber, and dc is an inner diameter of the detection coil. When the value of $\nu$ is small, the a.c. bridge, etc must have high sensitivity, or the gain of an amplifier must be made large, and especially when a high frequency is used as will be described later, the difficulties are augmented. For example, when the outer diameter of the optical fiber is 125 $\mu$m, it is preferable that the inner diameter of the detection coil is less than 500 $\mu$m (0.5 mm). Accordingly, in the device for producing an optical fiber whose outer diameter is about 250 $\mu$m, the practical range of the inner diameter of the detection coil may be less than 1 mm.

On the other hand, the frequency f of the high-frequency power source 8 used in measuring the film thickness is determined depending on a conductivity $\sigma$ and a permeability $\mu$ of the conductive thin film so that the penetration depth $\delta$ of the eddy current in the thin film becomes a suitable value. The penetration depth $\delta$ is given by

$$\delta = 1/\sqrt{\pi f \sigma \mu} \qquad (2)$$

It is preferable that the penetration depth $\delta$ is sufficiently large for a film thickness of the conductive thin film of the optical fiber and is sufficiently small for an outer diameter of the optical fiber. When Formula (2) is calculated with a constant of the carbon film inserted and with the outer diameter of the optical fiber being 100 $\mu$m, the frequency f is higher than 250 MHz. Compared with 440 KHz of a copper wire of the same thickness, the difference of these two frequencies is apparent. Incidentally, in the case of the carbon film, the optical fiber of an 80 $\mu$m-outer diameter has a frequency higher than 390MHz, and that of a 200 $\mu$m-outer diameter has a frequency higher 60 MHz. Based on this, it can be said that the practical range of the frequency for the carbon film is above 10 MHz.

The above-described measurement of the film thickness much depends on the outer diameter of the optical fiber. Accordingly it is a condition for measuring the film thickness with high accuracy that the outer diameter of the optical fiber is controlled to be within a set dimensional allowance.

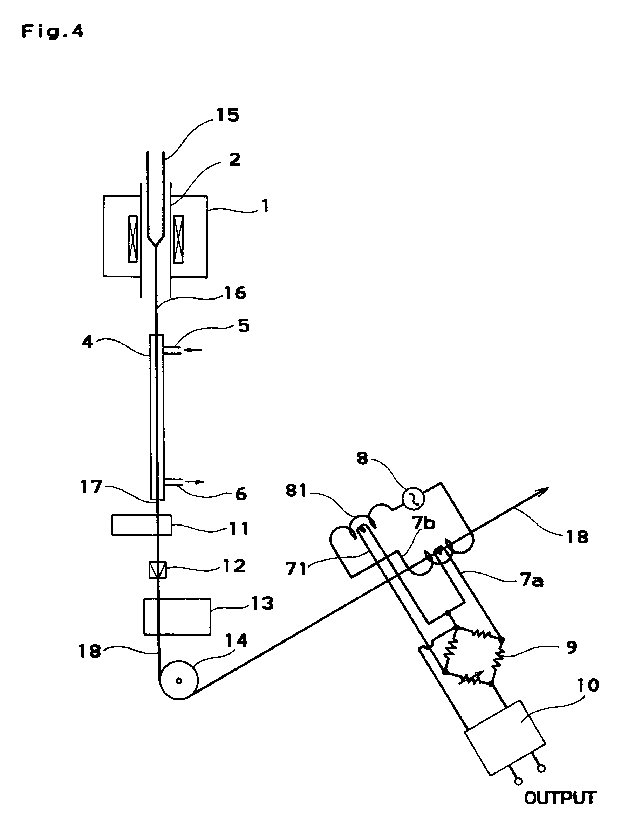

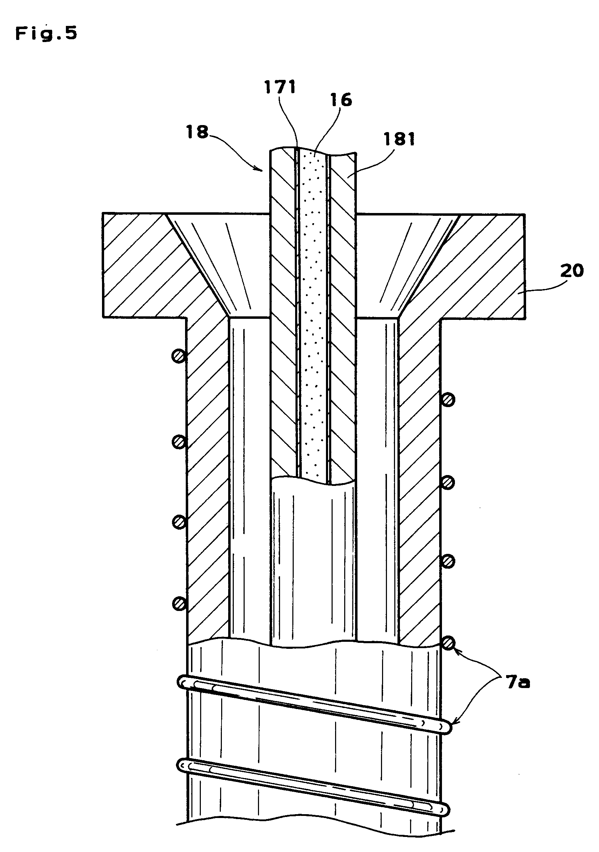

FIGs. 4 and 5 show the device according to a third embodiment of this invention.

As shown in FIG, 4, a film thickness measuring device comprising a detection coil 7a, a signal processing unit 10, etc. is disposed downstream of a capstan 14, i.e., downstream of a resin coating device comprising a die 12 for applying a resin and a curing furnace 13. This arrangement prevents a great decrease of the tensile strength of an optical fiber even if the optical fiber should contact the measuring coil, etc. As shown in FIG. 5, an optical fiber 18 having a resin coating 181 applied to a conductive thin film 171 is passed through a cylindrical guide pipe 20 of Teflon, and the detection coil 7a is wound on the outside periphery of the guide pipe 20. The inside periphery of the guide pipe 20 is finished smooth, and in addition, the entrance of the guide pipe 20 at which the optical fiber 18 introduced thereinto has an increased inner diameter. These arrangements prevent the bare fiber 16 and the conductive thin-film 171 from being much damaged even when the optical fiber 18 largely deflects.

The thus-obtained information of film thickness, etc. concerning the film characteristic are very useful in producing the optical fiber. First, based on the information of the film characteristic 1, the quality of the conductive thin film of a produced optical fiber can be grasped all over the entire length thereof to guarantee its users the quality. That is, the manufacturer can know as a measured result, for example, that a 30 km-long optical fiber has a film thickness of 500± 50 Angstroms over the initial 10 km-length, a film thickness of 490± 50 Angstroms over the next 10 km-length, and a film thickness of 490± 20 Angstroms over the next 10 km-length, and can provide this data to users. Secondly, when it is found that the film characteristics is poor at the initial stage of drawing an optical fiber from a preform, the drawing operation can be immediately stopped to set new conditions and can be resumed. Thus, it can be said that non-contact, continuous measurement of the film characteristic brings about such advantageous effects, but furthermore in order to assure homogeneous film quality, information of the film quality is fed back for the adjustment of thin film coating conditions as will be described below.

First, the flow rate of a reaction gas caused to flow through the susceptor 4 is adjusted. When a film thickness of the conductive thin film is too small, the flow rate of the reaction gas is increased to increase the film thickness. Adversely when a film thickness is too large, the flow rate of the reaction gas is decreased to reduce the film thickness. Then, information of the film thickness of the conductive thin film obtained as an output signal of the signal processing unit 10 is fed back to the controller of the thin film coating device, and an opening, etc. of a flow control valve is adjusted, therefore, a uniform film thickness is assured. This is the same with the concentration of the reaction gas. As the concentration is higher, the conductive thin film can be made thicker, and as the concentration is lower, the film can be made thinner. Such adjustment of the concentration of the reaction gas can be controlled by adjusting the flow rate of a carrier gas. The thickness of the conductive thin film can be adjusted also by the temperature of the bare fiber 16 in the susceptor 4. Generally as the temperature is higher, the conductive thin film becomes thicker. Such temperature adjustment of the bare fiber 16 can be easily affected by bringing the susceptor 4 nearer to or remote from the preform 15. This is because the bare fiber immediately after drawn is heated high temperature and decreases the temperature as it goes away from the preform. Then, the information of the film thickness of the conductive thin film supplied as the output signal of the signal processing unit 10 is fed back to the controller of the thin film coating device to control a motor for driving the thin film coating device vertically to adjust a spacing between the preform and the thin film coating device, and a uniform film thickness can be assured.

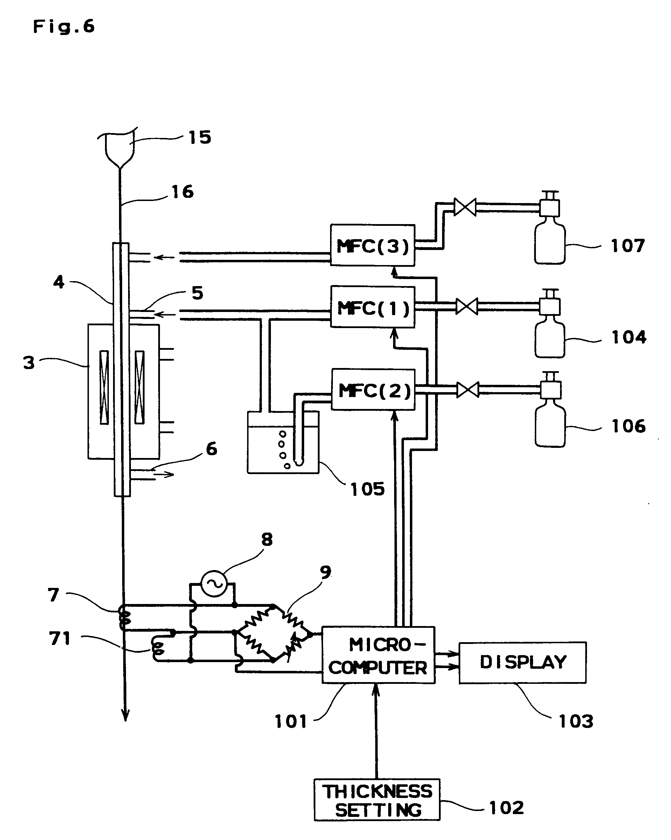

With reference to FIG. 6, the control of the film thickness of the conductive thin film by using the flow rate of a reaction gas or the concentration thereof will be specifically explained below by means of an embodiment. An output of the a.c. bridge 9 connected to the detection coil 7 and the reference coil 71 is supplied to the microcomputer 101. A required film thickness set by an operator using a film thickness setting device 102 will be inputted to the microcomputer 101. The microcomputer 101 computes an actual measured value of the film thickness using the output voltage of the a.c. bridge 9 and compares this actual measured value with the set value supplied by the film thickness setting device 102. This actual measured value is indicated by a display 103, while supplying a control signal to three mass flow controllers MFC(1) to (3). The MFC(1) is used for feeding a gas material to the susceptor 4 from a bomb 104. The MFC(2) is used to feed a liquid material supplied into a bubbler 105 to the susceptor 4 using the gas from the bomb 106 as a carrier gas. The MFC(3) is used to feed a carrier gas from a bomb 107 to the susceptor 4. Such control of the flow rate of the reaction gas and the concentration thereof is known in, e.g., Japanese Patent Laid-Open Publication No. 176328/1988.

According to this invention, variations of the film characteristics of an optical fiber including the film thickness, coated with a thin film of a conductive material, such as carbon, can be continuously measured as variations of the electrical resistance. In addition, this measurement of the film characteristics is conducted completely in non-contact with the optical fiber, and accordingly the surface of the optical fiber is never damaged. Since the film characteristics of an optical fiber, such as the film thickness, can be continuously monitored during its drawing operation, it is also possible to promptly determine coating conditions of the conductive thin film on real time as required, with a result that good film characteristic can be assured all over the length of the resultant optical fiber. In addition, it is possible to omit the step that an optical fiber is inspected on the film characteristic after taken up on a drum.

## Claims

1. A method for producing a conductive thin film coated optical fiber, comprising:
   - the first step of coating an optical fiber (16) drawn from a preform (15) with a conductive thin film (171); and
   - the second step of passing the thin film coated optical fiber (17) through a high frequency magnetic field to perform a non-contact measurement of an eddy current generated in the conductive thin film (171) of the thin film coated optical fiber (17) so as to measure thin film characteristics of the conductive thin film (171).

2. A method according to claim 1, further comprising the step of applying and curing a resin after the application of the conductive thin film (171) prior to the second step.

3. A method according to claim 1 or 2, wherein coating conditions for the conductive thin film (17) in the first step are controlled based on the film characteristic measured in the second step.

4. A device for producing a conductive thin film coated optical fiber, comprising
   - a fiber drawing furnace (1) for heating to melt a preform (15) to draw an optical fiber (16);
   - thin film coating means (3 to 6) for applying a conductive thin film (171) to the drawn optical fiber (16);
   - film characteristics measuring means for measuring film characteristics of the conductive thin film (171) comprising an air-core detection coil (7) connected to a high frequency power source (8) and measuring the film characteristics of the conductive thin film (171), based on a variation of an alternating current impedance of the detection coil (7) generated when the optical fiber is passed through the hollow interior of the detection coil (7).

5. A device according to claim 4, wherein the film characteristic measuring means further comprises an air-core reference coil (71) which has substantially the same characteristics as the detection coil (7) and is connected to the high-frequency power source (8) and detecting means (9, 10) for detecting a variation of the alternating current impedance in the detection coil (7) by detecting a difference between an alternating current impedance of the detection coil (7) and that of the reference coil (7).

6. A device according to claim 4 or 5, wherein the thin film coating means further comprises control means (101-107) for controlling coating conditions based on a measured value of the film characteristics by the film characteristic measuring means.

7. A device according to claim 6, wherein the control means controls the coating conditions based on a difference between a measured value of the film characteristics and a preset value of the film characteristic.

8. A device according to claim 6 or 7, wherein the film characteristic measuring means is disposed downstream of a resin coating device (12, 18) for applying a resin to the conductive thin film .

**Patentansprüche**

1. Verfahren zur Herstellung einer Lichtleitfaser, die mit einem leitenden dünnen Film beschichtet ist, aufweisend:
   - den ersten Schritt des Beschichtens einer Lichtleitfaser (16), die von einer Vorform (15) gezogen wird, mit einem leitenden dünnen Film (171); und
   - den zweiten Schritt des Hindurchführens der mit dem dünnen Film beschichteten Lichtleitfaser (17) durch ein hochfrequentes Magnetfeld, um eine berührungslose Messung des Wirbelstroms durchzuführen, welcher in dem leitenden dünnen Film (171) der mit dem dünnen Film beschichteten Lichtleitfaser (17) erzeugt wird, um die Dünnfilmeigenschaften des leitenden dünnen Film (171) zu messen.

2. Verfahren nach Anspruch 1, das weiter, vor dem zweiten Schritt, den Schritt des Aufbringens und Härtens eines Harzes nach Aufbringen des leitenden dünnen Films (171) umfaßt.

3. Verfahren nach Anspruch 1 oder 2, bei dem im ersten Schritt die Beschichtungsbedingungen für den leitenden dünnen Film (17) auf der Basis der im zweiten Schritt gemessenen Filmeigenschaften gesteuert werden.

4. Einrichtung zum Erzeugen einer Lichtleitfaser, die mit einem dünnen Film beschichtet ist, aufweisend:
   - einen Faserziehofen (1) zum Erwärmen einer Vorform (15) bis zum Schmelzen, um eine Lichtleitfaser (16) zu ziehen;
   - Dünnfilmbeschichtungseinrichtungen (3 bis 6) zum Aufbringen eines leitenden dünnen Films (161) auf die gezogene Lichtleitfaser (16);
   - Filmmerkmalsmeßvorrichtungen zum Messen der Filmeigenschaften des leitenden dünnen Films (171), die eine eisenfreie Detektorspule (7) aufweisen, welche an eine Hochfrequenzleistungsquelle (8) angeschlossen ist und die Filmeigenschaften des leitenden dünnen Films (171) auf der Basis einer Änderung der Wechselstromimpedanz der Detektorspule (7) mißt, die erzeugt wird, wenn die Lichtleitfaser durch das hohle Innere der Detektorspule (7) hindurchgeführt wird.

5. Einrichtung nach Anspruch 4, bei der die Filmmerkmalsmeßvorrichtung weiter eine eisenfreie Referenzspule (71) aufweist, die im wesentlichen die gleichen Merkmale wie die Detektorspule (7) besitzt und an die Hochfrequenzleistungsquelle (8) sowie an Erfassungseinrichtungen (9, 10) angeschlossen ist, um eine Änderung der Wechselstromimpedanz in der Detektorspule (7) durch Erfassen des Unterschiedes zwischen der Wechselstromimpedanz der Detektorspule (7) und der der Referenzspule (71) zu erkennen.

6. Einrichtung nach Anspruch 4 oder 5, bei der die Dünnfilmbeschichtungseinrichtung weiter Steuervorrichtungen (101-107) zum Steuern der Beschichtungsbedingungen auf der Basis eines von der Filmmerkmalsmeßvorrichtung gemessenen Wertes der Filmeigenschaften aufweisen.

7. Einrichtung nach Anspruch 6, bei der die Steuervorrichtung die Beschichtungsbedingungen auf der Basis des Unterschiedes zwischen dem gemessenen Wert der Filmeigenschaften und einem voreingestellten Wert der Filmeigenschaften steuert.

**8.** Einrichtung nach Anspruch 6 oder 7, bei der die Filmmerkmalsmeßvorrichtung stromabwärts der mit Harz beschichteten Einrichtung (12, 18) zum Aufbringen des Harzes auf den leitenden dünnen Film angeordnet ist.

## Revendications

**1.** Procédé pour produire une fibre optique revêtue d'un film mince conducteur, comprenant :
- la première étape consistant à revêtir une fibre optique (16) filée à partir d'une préforme (15) d'un film mince conducteur (171), et
- la seconde étape consistant à passer la fibre optique revêtue du film mince (17) à travers un champ magnétique à haute fréquence afin d'effectuer une mesure sans contact du courant de Foucault produit dans le film mince conducteur (171) de la fibre optique revêtue du film mince (17) de façon à mesurer les caractéristiques de film mince du film mince conducteur (171).

**2.** Procédé selon la revendication 1, comprenant de plus l'étape consistant à appliquer et durcir une résine après l'application du film mince conducteur (171) avant la seconde étape.

**3.** Procédé selon la revendication 1 ou 2, dans lequel les conditions de revêtement pour le film mince conducteur (17) dans la première étape sont contrôlées sur la base de la caractéristique du film mesurée pendant la seconde étape.

**4.** Dispositif pour produire une fibre optique revêtue d'un film mince conducteur, comprenant
- un four de filement de fibre (1) pour chauffer jusqu'à la fusion une préforme (15) afin de filer une fibre optique (16),
- un moyen de revêtement de film mince (3 à 6) pour appliquer un film mince conducteur (171) sur la fibre optique filée (16),
- un moyen de mesure de caractéristiques de film destiné à mesurer les caractéristiques du film du film mince conducteur (171) comprenant une bobine de détection à air (7) reliée à une source d'alimentation haute fréquence (8) et pour mesurer les caractéristiques de film du film mince conducteur (171), sur la base de la variation de l'impédance à courant alternatif de la bobine de détection (7) produite lorsque la fibre optique passe dans l'intérieur creux de la bobine de détection (7).

**5.** Dispositif selon la revendication 4, dans lequel le moyen de mesure de caractéristiques de film comprend de plus une bobine de référence à air (71) qui a pratiquement les mêmes caractéristiques que la bobine de détection (7) et est reliée à la source d'alimentation haute fréquence (8) et un moyen de détection (9, 10) pour détecter une variation de l'impédance à courant alternatif dans la bobine de détection (7) par la détection d'une différence entre une impédance à courant alternatif de la bobine de détection (7) et celle de la bobine de référence (7).

**6.** Dispositif selon la revendication 4 ou 5, dans lequel le moyen de revêtement de film mince comprend de plus un moyen de contrôle (101 à 107) pour contrôler les conditions de revêtement sur la base d'une valeur mesurée des caractéristiques de film par le moyen de mesure de caractéristique de film.

**7.** Dispositif selon la revendication 6, dans lequel le moyen de contrôle contrôle les conditions de revêtement sur la base de la différence entre une valeur mesurée des caractéristiques du film et une valeur pré-établie de la caractéristique du film.

**8.** Dispositif selon la revendication 6 ou 7, dans lequel le moyen de mesure de caractéristiques du film est disposé en aval du dispositif de revêtement de résine (12, 18) pour appliquer une résine au film mince conducteur.

Fig.1

Fig.2

Fig.3

Fig.4

Fig.5

Fig.6